# EUROPEAN PATENT APPLICATION

(11) **EP 3 185 608 A1**
(43) Date of publication of application: **28.06.2017**
(21) Application number: 14900850.0
(22) Date of filing: 28.08.2014
(51) Int. Cl.: H04W 24/10

(54) **MULTIMEDIA DATA TRANSMISSION METHOD AND NETWORK DEVICE**

(71) Applicant: Huawei Technologies Co. Ltd., Shenzhen, Guangdong 518129 (CN)
(72) Inventor: ZHANG, Bin, Shenzhen Guangdong 518129 (CN); WANG, Zhihong, Shenzhen Guangdong 518129 (CN)
(74) Representative: Gill Jennings & Every LLP
(86) International application number: PCT/CN2014/085447
(87) International publication number: WO 2016/029411

(57) **Abstract**

The present invention relates to the field of mobile communications technologies, and in particular, to a method and an apparatus for transmitting multimedia data. In this solution, when a CQI sent by a terminal is not acquired within a first preset quantity of consecutive TTIs, a preset CQI value is determined, where the preset CQI value is a CQI value used by the network device to send multimedia data. In this way, the terminal can accurately receive the multimedia data sent by the network device. Therefore, a defect of poor quality of multimedia service received by the terminal is eliminated, and user experience is improved.

## Description

### TECHNICAL FIELD

The present invention relates to the field of communications technologies, and in particular, to a method for transmitting multimedia data and a network device.

### BACKGROUND

An HSPA (High Speed Packet Access, high speed packet access) technology improves power efficiency greatly. Therefore, the HSPA technology is applied in an increasingly wider range in the field of communications technologies.

The HSPA includes HSDPA (High Speed Downlink Packet Access, high speed downlink packet access) and HSUPA (High Speed Uplink Packet Access, high speed uplink packet access). Relevant control information of downlink data of the HSDPA is transmitted on an HS-SCCH (Shared Control Channel for HS-DSCH, high speed shared control channel), and the control information indicates a transmission format, HARQ (Hybrid Automatic Repeat reQuest, hybrid automatic repeat request) information, power control information, synchronization information, and the like of data that is carried on an HS-DSCH (High Speed Downlink Shared Channel, high speed downlink shared channel). The HSDPA technology is enhancement and evolution of the Time Division-Synchronous Code Division Multiple Access standard in a wireless technology part, and can significantly increase a transmission rate of downlink data, and a theoretical peak value may be increased to 2.8 Mbps. In the HSUPA, an E-AGCH (E-DCH Absolute Grant Channel, E-DCH absolute grant channel) of an E-DCH (Enhanced Dedicated Channel, enhanced dedicated channel) bears scheduling and control information of data transmitted on the E-DCH channel.

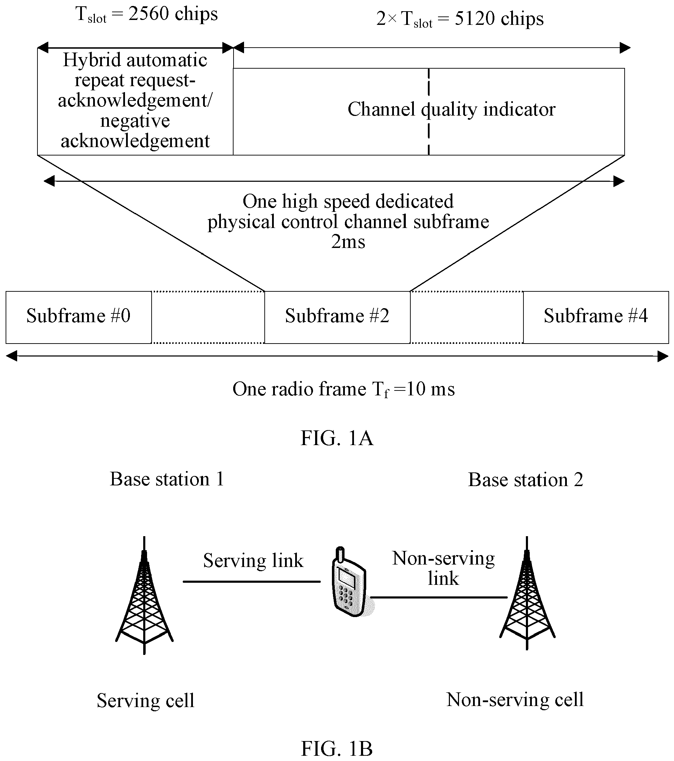

When a base station needs to send HSDPA data to UE (User Equipment, user equipment), the base station first sends downlink scheduling and control information on the HS-SCCH channel, and indicates to the UE that HSDPA data exists on a subsequent high speed physical downlink shared channel HS-PDSCH (High Speed Physical Downlink Shared Channel, high speed physical downlink shared channel); and the UE receives a transmission block by deciphering the HS-SCCH channel, and sends HS-DPCCH (High Speed Dedicated Physical Control Channel, high speed dedicated physical control channel) information to the base station, where the HS-DPCCH information is shown in FIG. 1A, and the information includes CQI (Channel Quality Indicator, channel quality indicator) information and an ACK (Acknowledgement, acknowledgement) message/a NACK (Negative ACKnowledge, negative acknowledgement) message.

When needing to send HSUPA data to the base station, the UE first sends separately or carries an SI (Scheduling Information, scheduling information) request on an E-PUCH (E-DCH Physical Uplink Channel, enhanced dedicated channel physical uplink channel) channel. After the request is scheduled by the base station, the base station sends HSUPA control information to the UE on the E-AGCH channel that the UE listens on. The UE sends uplink data according to the information by using the E-PUCH channel. After receiving the data, the base station sends an ACK message/a NACK message.

When data is transmitted by using the HSPA technology, in a scenario in which uplink signal quality is lower than downlink signal quality, there exists a defect of low service quality due to the following reasons:

For example, when a terminal is located in a handover area, there are two uplinks: a serving link (a link between the terminal and a serving cell) and a non-serving link (a link between the terminal and a non-serving cell), as shown in FIG. 1B. In this case, transmit power of the terminal is controlled by an uplink with higher uplink signal quality in the two links. Therefore, when uplink signal quality of the non-serving link is higher than uplink signal quality of the serving link, and the serving cell of the terminal does not change, the terminal reduces the transmit power of the terminal.

In this way, a base station of the serving cell cannot correctly receive HS-DPCCH channel information fed back by the UE, and then cannot acquire HARQ-ACK information and CQI information. The base station determines the transmit power according to the CQI information. If transmit power used is incorrect, there exists a defect that audio and video data delivered by the base station cannot be correctly received by the terminal, and then audio and video quality is affected and user experience is compromised. The base station determines, according to the HARQ-ACK information, whether the UE correctly receives data sent by the base station, and further determines whether retransmission is needed. If the base station does not receive the HARQ-ACK information, even if the terminal does not correctly receive the data sent by the base station, the base station still considers that the terminal correctly receives the data sent by the base station. Therefore, there also exists the defect that audio and video data delivered by the base station cannot be correctly received by the terminal, and then audio and video quality is affected and user experience is compromised.

To solve the foregoing problems, in the prior art, the audio and video data is sent in a same manner as a common data service. However, this solution improves the audio and video quality by utilizing a feature of multiple retransmissions of the common data service, but still does not eliminate the defect that quality of audio and video services received by the terminal is poor because the base station cannot acquire the CQI information.

### SUMMARY

Embodiments of the present invention provide a method for transmitting multimedia data and a network device, to eliminate a defect that quality of a received audio and video service is poor because the network device cannot acquire CQI information.

According to a first aspect, a network device is provided, including:
a setting unit, configured to determine a preset CQI value when a channel quality indicator CQI that is sent by a terminal and borne on a high speed dedicated physical control channel HS-DPCCH is not acquired within a first preset quantity of consecutive transmission time intervals TTIs, where the preset CQI value is a CQI value used when the network device sends multimedia data;
an allocation unit, configured to allocate an air interface resource according to the preset CQI value; and
a transmission unit, configured to transmit multimedia data to the terminal by using the air interface resource.

With reference to the first aspect, in a first possible implementation manner, the preset CQI value determined by the setting unit is any numerical value from 8 to 15.

With reference to the first aspect or the first possible implementation manner of the first aspect, in a second possible implementation manner, the transmission unit is further configured to:
retransmit the multimedia data to the terminal when an acknowledgement ACK message or a negative acknowledgement NACK message fed back by the terminal for the multimedia data is not acquired within a second preset quantity of consecutive TTIs.

With reference to a second possible implementation manner of the first aspect, in a third possible implementation manner, if a period of transmitting the multimedia data to the terminal by the transmission unit is 20 ms, the number of retransmission times used by the transmission unit to retransmit the multimedia data is 2; or
if a period of transmitting the multimedia data to the terminal by the transmission unit is greater than 20 ms, the number of retransmission times used by the transmission unit to retransmit the multimedia data is 4.

With reference to the first aspect or the first to third possible implementation manners of the first aspect, in a fourth possible implementation manner, the transmission unit is specifically configured to:
if a size of an idle air interface resource is greater than or equal to a size of the air interface resource allocated according to the preset CQI value, retransmit the multimedia data to the terminal by using the air interface resource allocated according to the preset CQI value; or
if a size of an idle air interface resource is smaller than a size of the air interface resource allocated according to the preset CQI value, retransmit the multimedia data to the terminal by using the idle air interface resource.

According to a second aspect, a network device is provided, including a communications bus, at least one communications interface, a memory, at least one processor, and a transceiver, where:
the communications bus is configured to implement connections and communication among the at least one communications interface, the memory, the at least one processor, and the transceiver;
any communications interface of the at least one communications interface is configured to connect to and communicate with an external device;
the memory is configured to store program code that needs to be executed;
the at least one processor is configured to invoke the program code stored in the memory, so as to determine a preset CQI value when the network device does not acquire, within a first preset quantity of consecutive transmission time intervals TTIs, a channel quality indicator CQI that is sent by a terminal and borne on a high speed dedicated physical control channel HS-DPCCH, where the preset CQI value is a CQI value used when the network device sends multimedia data; and allocate an air interface resource according to the preset CQI value; and
the transceiver is configured to transmit multimedia data to the terminal by using the air interface resource.

With reference to the second aspect, in a first possible implementation manner, the preset CQI value determined by the any processor is any numerical value from 8 to 15.

With reference to the second aspect or the first possible implementation manner of the second aspect, in a second possible implementation manner, the transceiver is further configured to:
retransmit the multimedia data to the terminal when an acknowledgement ACK message or a negative acknowledgement NACK message fed back by the terminal for the multimedia data is not acquired within a second preset quantity of consecutive TTIs.

With reference to a second possible implementation manner of the second aspect, in a third possible implementation manner, if a period of transmitting the multimedia data to the terminal by the transceiver is 20 ms, the number of retransmission times used by the transceiver to retransmit the multimedia data is 2; or
if a period of transmitting the multimedia data to the terminal by the transceiver is greater than 20 ms, the number of retransmission times used by the transceiver to retransmit the multimedia data is 4.

With reference to the second aspect or the first to third possible implementation manners of the second aspect, in a fourth possible implementation manner, the transceiver is specifically configured to:
if a size of an idle air interface resource is greater than or equal to a size of the air interface resource allocated according to the preset CQI value, retransmit the multimedia data to the terminal by using the air interface resource allocated according to the preset CQI value; or
if a size of an idle air interface resource is smaller than a size of the air interface resource allocated according to the preset CQI value, retransmit the multimedia data to the terminal by using the idle air interface resource.

According to a third aspect, a method for transmitting multimedia data is provided, including:
determining, by a network device, a preset CQI value when a channel quality indicator CQI that is sent by a terminal and borne on a high speed dedicated physical control channel HS-DPCCH is not acquired within a first preset quantity of consecutive transmission time intervals TTIs, where the preset CQI value is a CQI value used when the network device sends multimedia data;
allocating, by the network device, an air interface resource according to the preset CQI value; and
transmitting, by the network device, multimedia data to the terminal by using the air interface resource.

With reference to the third aspect, in a first possible implementation manner, the preset CQI value is any numerical value from 8 to 15.

With reference to the third aspect or the first possible implementation manner of the third aspect, in a second possible implementation manner, after the transmitting, by network device, multimedia data to the terminal by using the air interface resource, the method further includes:
retransmitting the multimedia data to the terminal when an acknowledgement ACK message or a negative acknowledgement NACK message fed back by the terminal for the multimedia data is not acquired within a second preset quantity of consecutive TTIs.

With reference to a second possible implementation manner of the third aspect, in a third possible implementation manner, if a period of transmitting the multimedia data to the terminal by the network device is 20 ms, the number of retransmission times used to retransmit the multimedia data is 2; or
if a period of transmitting the multimedia data to the terminal by the network device is greater than 20 ms, the number of retransmission times used to retransmit the multimedia data is 4.

With reference to the third aspect or the first to third possible implementation manners of the third aspect, in a fourth possible implementation manner, the retransmitting, by the network device, the multimedia data to the terminal specifically includes:
if a size of an idle air interface resource is greater than or equal to a size of the air interface resource allocated according to the preset CQI value, retransmitting, by the network device, the multimedia data to the terminal by using the air interface resource allocated according to the preset CQI value; or
if a size of an idle air interface resource is smaller than a size of the air interface resource allocated according to the preset CQI value, retransmitting, by the network device, the multimedia data to the terminal by using the idle air interface resource.

In the prior art, during handover of a terminal, for example, in a scenario in which uplink signal quality is lower than downlink signal quality, there exists a defect that quality of a multimedia service received by the terminal is poor because a network device cannot acquire CQI information. In embodiments of the present invention, a method for transmitting multimedia data is provided. In this solution, when a CQI sent by a terminal is not acquired within a first preset quantity of consecutive TTIs (Transmission Time Interval, transmission time interval), a preset CQI value is determined, where the preset CQI value is a CQI value used when a network device sends multimedia data; an air interface resource is allocated according to the preset CQI value; and multimedia data is transmitted to the terminal by using the air interface resource. In this solution, when the CQI sent by the terminal is not acquired within the first preset quantity of consecutive TTIs, the preset CQI value is determined, and the preset CQI value is a CQI value used when the network device sends multimedia data. In this way, the terminal can accurately receive the multimedia data sent by the network device. Therefore, the defect of poor quality of a multimedia service received by the terminal is eliminated, and user experience is improved.

### BRIEF DESCRIPTION OF DRAWINGS

FIG. 1A is a schematic diagram of information borne on an HS-DPCCH in the prior art;
FIG. 1B is a schematic diagram of handover of a terminal in the prior art;
FIG. 2 is a flowchart of a method for transmitting multimedia data according to an embodiment of the present invention;
FIG. 3 is an embodiment of transmission of multimedia data according to an embodiment of the present invention;
FIG. 4 is a schematic structural diagram of functions of a network device according to an embodiment of the present invention; and
FIG. 5 is a schematic diagram of an entity structure of a network device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The following describes exemplary implementation manners of the present invention in detail with reference to the accompanying drawings of the specification. It should be understood that, the exemplary embodiments described herein are only used to describe and explain the present invention, but are not used to limit the present invention. The embodiments in this application and features in the embodiments may be combined with each other in a case in which they do not conflict.

The following describes the exemplary implementation manners of the present invention in detail with reference to the accompanying drawings.

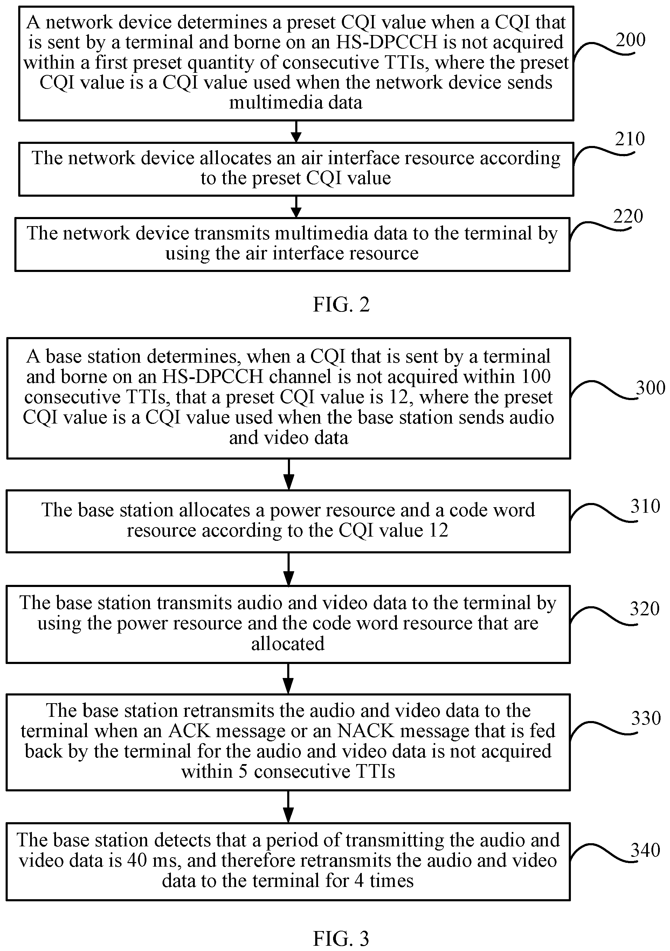

Referring to FIG. 2, in an embodiment of the present invention, a detailed procedure of transmitting multimedia data is as follows:

### Embodiment 1

Step 200: A network device determines a preset CQI value when a CQI that is sent by a terminal and borne on an HS-DPCCH is not acquired within a first preset quantity of consecutive TTIs, where the preset CQI value is a CQI value used when the network device sends multimedia data.

Step 210: The network device allocates an air interface resource according to the preset CQI value.

Step 220: The network device transmits multimedia data to the terminal by using the air interface resource.

In this embodiment of the present invention, optionally, the first preset quantity is 100, and certainly may be another numerical value as an application scenario varies. Details are not described again herein.

In this embodiment of the present invention, there are multiple types preset CQI values. Optionally, the CQI value is any numerical value from 8 to 15, for example, 12 is used as the CQI value. Certainly, with the development of science and technology or as the application scenario varies, the CQI value may also be another value. Details are not described again herein.

In this embodiment of the present invention, the air interface resource allocated according to the preset CQI value includes a power resource and a code word resource.

In this embodiment of the present invention, a specific value of the power resource needs to be determined according to available power of the network device. Details are not described again herein.

Further, to make the terminal receive the multimedia data, in this embodiment of the present invention, after the transmitting the multimedia data to the terminal by using the air interface resource, the following operation is further included:
when an ACK message or a NACK message fed back by the terminal for the multimedia data is not acquired within a second preset quantity of consecutive TTIs, retransmitting the multimedia data to the terminal.

In this embodiment of the present invention, optionally, the second preset quantity is 5. Certainly, the second preset quantity may vary according to the application scenario. Details are not described again herein.

In this embodiment of the present invention, to set the number of retransmission times, the network device may obtain, by means of detection, a period of transmitting the multimedia data, and set the number of retransmission times dynamically according to the period of transmitting the multimedia data, where the period of transmitting the multimedia data is 20 ms, 40 ms, or 60 ms. Optionally, if the period of transmitting the multimedia data to the terminal is 20 ms, the number of retransmission times used to retransmit the multimedia data is 2; or
if a period of transmitting the multimedia data to the terminal is greater than 20 ms, the number of retransmission times used to retransmit the multimedia data is 4.

In this embodiment of the present invention, there are multiple manners for retransmitting the multimedia data to the terminal. Optionally, the following manners may be used:
if a size of an idle air interface resource is greater than or equal to a size of the air interface resource allocated according to the preset CQI value, the multimedia data is retransmitted to the terminal by using the air interface resource allocated according to the preset CQI value, that is, the multimedia data is retransmitted by using the CQI value used in initial transmission of the multimedia data; further, to improve accuracy of the multimedia data received by the terminal, the multimedia data may also be retransmitted by using a CQI value greater than that used in initial transmission of the multimedia data; and in this case, the multimedia data is retransmitted to the terminal by using an air interface resource allocated according to a CQI value greater than the preset CQI value; or
if a size of an idle air interface resource is smaller than a size of the air interface resource allocated according to the preset CQI value, the multimedia data is retransmitted to the terminal by using the idle air interface resource; and in this way, accuracy of the multimedia data received by the terminal may still be improved by using an HARQ combination gain.

In Embodiment 1, when the CQI sent by the terminal is not acquired within the first preset quantity of consecutive TTIs, the preset CQI value is determined, and the preset CQI value is a CQI value used when the network device sends multimedia data. In this way, the terminal can accurately receive the multimedia data sent by the network device. Therefore, a defect of poor quality of a multimedia service received by the terminal is eliminated, and user experience is improved.

In this embodiment of the present invention, the multimedia data may be voice data, or may be video data, and certainly, may be other data. Details are not described again herein.

In this embodiment of the present invention, the network device may be a base station, or may be a controller, and certainly, may be another device. Details are not described again herein.

For better comprehension of this embodiment of the present invention, the following provides a specific application scenario, and further describes a procedure of transmitting audio and video data in detail, as shown in FIG. 3:

### Embodiment 2

Step 300: A base station determines that a preset CQI value is 12 when a CQI that is sent by a terminal and borne on an HS-DPCCH channel is not acquired within 100 consecutive TTIs, where the preset CQI value is a CQI value used by the base station when sending audio and video data. Step 310: The base station allocates a power resource and a code word resource according to the CQI value 12.

Step 320: The base station transmits audio and video data to the terminal by using the power resource and the code word resource that are allocated.

Step 330: The base station retransmits the audio and video data to the terminal when an ACK message or a NACK message that is fed back by the terminal for the audio and video data is not received within 5 consecutive TTIs.

Step 340: The base station retransmits the audio and video data to the terminal for 4 times when detecting that a period for retransmitting the audio and video data is 40 ms.

In this step, because the base station determines that a size of an idle air interface resource is greater than a size of the air interface resource allocated according to the preset CQI value, the base station retransmits the audio and video data to the terminal by using the air interface resource allocated according to the CQI value 12.

In Embodiment 2, when the CQI sent by the terminal is not acquired within 100 consecutive TTIs, the preset CQI value is 12, and the preset CQI value is a CQI value used by the base station to send audio and video data. In this way, the terminal can accurately receive the audio and video data sent by the base station. Therefore, a defect of poor quality of audio and video services received by the terminal is eliminated, and user experience is improved.

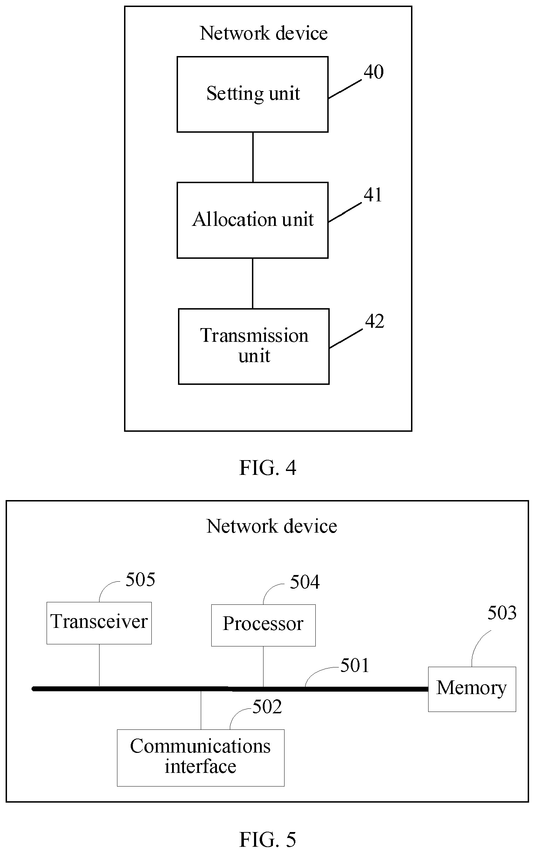

Based on the foregoing technical solution, referring to FIG. 4, this embodiment of the present invention provides a network device, where the network device includes a setting unit 40, an allocation unit 41, and a transmission unit 42, where:
the setting unit 40 is configured to determine a preset CQI value when a CQI that is sent by a terminal and borne on an HS-DPCCH is not acquired within a first preset quantity of consecutive TTIs, where the preset CQI value is a CQI value used when the network device sends multimedia data;
the allocation unit 41 is configured to allocate an air interface resource according to the preset CQI value; and
the transmission unit 42 is configured to transmit multimedia data to the terminal by using the air interface resource.

In this embodiment of the present invention, optionally, the preset CQI value determined by the setting unit 40 is any numerical value from 8 to 15.

In this embodiment of the present invention, further, the transmission unit 42 is further configured to:
retransmit the multimedia data to the terminal when an acknowledgement ACK message or a negative acknowledgement NACK message fed back by the terminal for the multimedia data is not acquired within a second preset quantity of consecutive TTIs.

In this embodiment of the present invention, optionally, if a period of transmitting the multimedia data to the terminal by the transmission unit 42 is 20 ms, the number of retransmission times used by the transmission unit 42 to retransmit the multimedia data is 2; or
if a period of transmitting the multimedia data to the terminal by the transmission unit 42 is greater than 20 ms, the number of retransmission times used by the transmission unit 42 to retransmit the multimedia data is 4.

In this embodiment of the present invention, optionally, the transmission unit is specifically configured to:
if a size of an idle air interface resource is greater than or equal to a size of the air interface resource allocated according to the preset CQI value, retransmit the multimedia data to the terminal by using the air interface resource allocated according to the preset CQI value; or
if a size of an idle air interface resource is smaller than a size of the air interface resource allocated according to the preset CQI value, retransmit the multimedia data to the terminal by using the idle air interface resource.

As shown in FIG. 5, FIG. 5 is a diagram of a physical apparatus of a network device according to the present invention. The network device includes a communications bus 501, at least one communications interface 502, a memory 503, at least one processor 504, and a transceiver 505, where:
the communications bus 501 is configured to implement connections and communication among the at least one communications interface 502, the memory 503, the at least one processor 504, and the transceiver 505;
any communications interface 502 in the at least one communications interface 502 is configured to connect to and communicate with an external device, where when the network device is a base station, the any communications interface 502 is configured for communication between the base station and a controller of the base station, and when the network device is a controller, the any communications interface 502 is configured for communication between the controller and a core network;
the memory 503 is configured to store program code that needs to be executed;
the at least one processor 504 is configured to invoke the program code stored in the memory 503, so as to determine a preset CQI value when the network device does not acquire, within a first preset quantity of consecutive TTIs, a CQI that is sent by a terminal and borne on an HS-DPCCH, where the preset CQI value is a CQI value used when the network device sends multimedia data; and allocate an air interface resource according to the preset CQI value; and
the transceiver 505 is configured to transmit multimedia data to the terminal by using the air interface resource.

When the at least one processor 504 executes a corresponding processing process, one processor 504 may execute the corresponding processing process alone, or multiple processors 504 may execute the corresponding processing process cooperatively.

In this embodiment of the present invention, optionally, the preset CQI value determined by the any processor 504 is any numerical value from 8 to 15.

In this embodiment of the present invention, further, the transceiver 505 is further configured to:
when an acknowledgement ACK message or a negative acknowledgement NACK message fed back by the terminal for the multimedia data is not acquired within a second preset quantity of consecutive TTIs, retransmit the multimedia data to the terminal.

In this embodiment of the present invention, optionally, if a period of transmitting the multimedia data to the terminal by the transceiver 505 is 20 ms, the number of retransmission times used by the transceiver 505 to retransmit the multimedia data is 2; or
if a period of transmitting the multimedia data to the terminal by the transceiver 505 is greater than 20 ms, the number of retransmission times used by the transceiver 505 to retransmit the multimedia data is 4.

In this embodiment of the present invention, optionally, the transceiver 505 is specifically configured to:
if a size of an idle air interface resource is greater than or equal to a size of the air interface resource allocated according to the preset CQI value, retransmit the multimedia data to the terminal by using the air interface resource allocated according to the preset CQI value; or
if a size of an idle air interface resource is smaller than a size of the air interface resource allocated according to the preset CQI value, retransmit the multimedia data to the terminal by using the idle air interface resource.

The apparatuses provided in FIG. 4 and FIG. 5 of the present invention are described with reference to flowcharts and/or block diagrams of the method, device (system), and computer program product in the embodiments of the present invention. It should be understood that computer program instructions may be used to implement each process and/or each block in the flowcharts and/or the block diagrams and a combination of a process and/or a block in the flowcharts and/or the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In summary, in the embodiments of the present invention, a method for transmitting multimedia data is provided. In this solution: when a CQI sent by a terminal is not acquired within a first preset quantity of consecutive TTIs, a preset CQI value is determined, where the preset CQI value is a CQI value used when a network device sends multimedia data; an air interface resource is allocated according to the preset CQI value; and multimedia data is transmitted to the terminal by using the air interface resource. In this solution, when the CQI sent by the terminal is not acquired within the first preset quantity of consecutive TTIs, the preset CQI value is determined, and the preset CQI value is a CQI value used when the network device sends multimedia data. In this way, the terminal can accurately receive the multimedia data sent by a base station. Therefore, a defect of poor quality of a multimedia service received by the terminal is eliminated, and user experience is improved.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A network device, comprising:
a setting unit, configured to determine a preset CQI value when a channel quality indicator CQI that is sent by a terminal and borne on a high speed dedicated physical control channel HS-DPCCH is not acquired within a first preset quantity of consecutive transmission time intervals TTIs, wherein the preset CQI value is a CQI value used when the network device sends multimedia data;
an allocation unit, configured to allocate an air interface resource according to the preset CQI value; and
a transmission unit, configured to transmit multimedia data to the terminal by using the air interface resource.

2. The network device according to claim 1, wherein the preset CQI value determined by the setting unit is any numerical value from 8 to 15.

3. The network device according to claim 1 or 2, wherein the transmission unit is further configured to:
retransmit the multimedia data to the terminal when an acknowledgement ACK message or a negative acknowledgement NACK message fed back by the terminal for the multimedia data is not acquired within a second preset quantity of consecutive TTIs.

4. The network device according to claim 3, wherein if a period of transmitting the multimedia data to the terminal by the transmission unit is 20 ms, the number of retransmission times used by the transmission unit to retransmit the multimedia data is 2; or
if a period of transmitting the multimedia data to the terminal by the transmission unit is greater than 20 ms, the number of retransmission times used by the transmission unit to retransmit the multimedia data is 4.

5. The network device according to any one of claims 1 to 4, wherein the transmission unit is specifically configured to:
if a size of an idle air interface resource is greater than or equal to a size of the air interface resource allocated according to the preset CQI value, retransmit the multimedia data to the terminal by using the air interface resource allocated according to the preset CQI value; or
if a size of an idle air interface resource is smaller than a size of the air interface resource allocated according to the preset CQI value, retransmit the multimedia data to the terminal by using the idle air interface resource.

6. A network device, comprising a communications bus, at least one communications interface, a memory, at least one processor, and a transceiver, wherein:
the communications bus is configured to implement connections and communication among the at least one communications interface, the memory, the at least one processor, and the transceiver;
any communications interface of the at least one communications interface is configured to connect to and communicate with an external device;
the memory is configured to store program code that needs to be executed;
the at least one processor is configured to invoke the program code stored in the memory, so as to determine a preset CQI value when the network device does not acquire, within a first preset quantity of consecutive transmission time intervals TTIs, a channel quality indicator CQI that is sent by a terminal and borne on a high speed dedicated physical control channel HS-DPCCH, wherein the preset CQI value is a CQI value used when the network device sends multimedia data; and allocate an air interface resource according to the preset CQI value; and
the transceiver is configured to transmit multimedia data to the terminal by using the air interface resource.

7. The network device according to claim 6, wherein the preset CQI value determined by the any processor is any numerical value from 8 to 15.

8. The network device according to claim 6 or 7, wherein the transceiver is further configured to:
retransmit the multimedia data to the terminal when an acknowledgement ACK message or a negative acknowledgement NACK message fed back by the terminal for the multimedia data is not acquired within a second preset quantity of consecutive TTIs.

9. The network device according to claim 8, wherein if a period of transmitting the multimedia data to the terminal by the transceiver is 20 ms, the number of retransmission times used by the transceiver to retransmit the multimedia data is 2; or
if a period of transmitting the multimedia data to the terminal by the transceiver is greater than 20 ms, the number of retransmission times used by the transceiver to retransmit the multimedia data is 4.

10. The network device according to any one of claims 6 to 9, wherein the transceiver is specifically configured to:
if a size of an idle air interface resource is greater than or equal to a size of the air interface resource allocated according to the preset CQI value, retransmit the multimedia data to the terminal by using the air interface resource allocated according to the preset CQI value; or
if a size of an idle air interface resource is smaller than a size of the air interface resource allocated according to the preset CQI value, retransmit the multimedia data to the terminal by using the idle air interface resource.

11. A method for transmitting multimedia data, comprising:
determining, by a network device, a preset CQI value when a channel quality indicator CQI that is sent by a terminal and borne on a high speed dedicated physical control channel HS-DPCCH is not acquired within a first preset quantity of consecutive transmission time intervals TTIs, wherein the preset CQI value is a CQI value used when the network device sends multimedia data;
allocating, by the network device, an air interface resource according to the preset CQI value; and
transmitting, by the network device, multimedia data to the terminal by using the air interface resource.

12. The method according to claim 11, wherein the preset CQI value is any numerical value from 8 to 15.

13. The method according to claim 11 or 12, wherein after the transmitting, by network device, multimedia data to the terminal by using the air interface resource, the method further comprises:
retransmitting the multimedia data to the terminal when an acknowledgement ACK message or a negative acknowledgement NACK message fed back by the terminal for the multimedia data is not acquired within a second preset quantity of consecutive TTIs.

14. The method according to claim 13, wherein if a period of transmitting the multimedia data to the terminal by the network device is 20 ms, the number of retransmission times used to retransmit the multimedia data is 2; or
if a period of transmitting the multimedia data to the terminal by the network device is greater than 20 ms, the number of retransmission times used to retransmit the multimedia data is 4.

15. The method according to claim 13 or 14, wherein the retransmitting, by the network device, the multimedia data to the terminal specifically comprises:
if a size of an idle air interface resource is greater than or equal to a size of the air interface resource allocated according to the preset CQI value, retransmitting, by the network device, the multimedia data to the terminal by using the air interface resource allocated according to the preset CQI value; or
if a size of an idle air interface resource is smaller than a size of the air interface resource allocated according to the preset CQI value, retransmitting, by the network device, the multimedia data to the terminal by using the idle air interface resource.
